# EUROPÄISCHE PATENTSCHRIFT

(11) **EP 0 816 745 B1**
(45) Veröffentlichungstag und Bekanntmachung des Hinweises auf die Patenterteilung: **28.11.2001**
(21) Anmeldenummer: 97109252.3
(22) Anmeldetag: 07.06.1997
(51) Int. Cl.: F16M 11/20, G01C 15/00

(54) **Nivellierbock**
Levelling stand
Support pour mise à niveau

(30) Priorität: 03.07.1996 DE 19626770
(43) Veröffentlichungstag der Anmeldung: 07.01.1998
(73) Patentinhaber: Melchior, Martin Theodor, D-66780 Rehlingen (DE)
(72) Erfinder: Melchior, Martin Theodor, D-66780 Rehlingen (DE)
(74) Vertreter: Flaccus, Rolf-Dieter, Dr.

(56) Entgegenhaltungen:
- DE-C- 827 712
- DE-U- 29 611 539
- US-A- 3 492 739
- US-A- 3 909 952
- US-A- 4 366 940
- US-A- 4 520 981

## Beschreibung

Die Erfindung betrifft einen Nivellierbock als Basis und/oder als Halterung für die Positionierung einer Lehre zum Ermitteln eines exakten Niveaus beispielsweise von Fließestrich, Pumpbeton oder dergleichen trägen Gußmassen, oder für eine Nivellierung von Gleisen und ähnlichen niveaubezogenen Elementen bzw. für eine Höheneinstellung von Deckenhaken für Hängedecken, relativ zu einer festen Bezugsebene, in Form eines dreibeinigen Stativs.

Derartige Nivellierböcke sind an sich bekannt. Sie werden in der Bauwirtschaft gelegentlich in größerer Anzahl an Baustellen zum Einhalten eines exakten Höhenniveaus z.B. beim Estrich- Aufgießen oder beim Auftragen von Gußasphalt etc. eingesetzt. Sie sollen robust, praxisgerecht, für eine Herstellung in größerer Stückzahl geeignet sowie möglichst preisgünstig herstellbar sein.
Bekannte Nivellierböcke sind in dieser Hinsicht nicht immer zufriedenstellend. Bei der gängigen Bauart besitzen sie eine mit Füßen bzw. mit drei Beinen ausgestattete Basisplatte, auf welcher das eigentliche Nivelliergerät aufgebracht und befestigt wird. Nachteilig ist das durch die Platte bedingte Gewicht, das beim Transport, beim Umsetzen der Böcke und auch bei der Herstellung als störend und damit als verbesserungsfähig empfunden wird.

Aus der US-A-3,492,739 ist ein Nivellierbock mit einer Halterung für die Positionierung einer Lehre bekannt, der die Form eines dreiarmigen Stativs aufweist und bei dem die Arme aus Flacheisen gebildet sind, deren Flachseiten mit zur Bezugsebene senkrechten Ebenen zusammenfallen und die eine zur Bezugsebene parallele Ebene aufspannen und in der senkrechten Projektion zur Bezugsebene ein "Y" mit drei gleich langen Schenkeln bilden, wobei jeder Arm an seinen freien Enden einen senkrecht gegen die Bezugsebene gerichteten abstandhaltenden Fuß aufweist und im Zentrum zwischen den Füßen und den Armen bzw. Schenkeln die Halterung angeordnet ist.

Der Erfindung liegt die Aufgabe zugrunde, eine vereinfachte Bauart für Nivellierböcke der im Oberbegriff von Anspruch 1 genannten Art anzugeben, durch die Nivellierböcke in größerer Stückzahl preisgünstig herstellbar sind.

Die Lösung der Aufgabe gelingt bei einem Nivellierbock der im Oberbegriff von Anspruch 1 genannten Art mit der Erfindung durch die im Kennzeichnungsteil des Haupt-anspruchs angegebenen Merkmale.

Dadurch, daß der Körper des erfindungsgemäßen Nivellierbocks in bekannter Weise aus Flacheisen besteht, die in der Projektion zur Bezugsebene drei Arme in Form eines "Y" bilden, und jeder Arm an seinem freien Ende als Standbein einen abstands-haltenden Fuß gegen die Bezugsebene besitzt, und die Halterung für die Positionierung einer Lehre im Zentrum zwischen den Füßen, erfindungsgemäß jedoch im Spreizwinkel der beiden gleichlangen Arme des in der Projektion Y-förmigen dreiarmigen Stativs angeordnet ist, wird ein sowohl äußerst robuster, als auch gewichtlich leichter und sehr preisgünstig herstellbarer Nivellierbock erhalten, der eine ideale Lösung der gestellten Aufgabe ergibt.

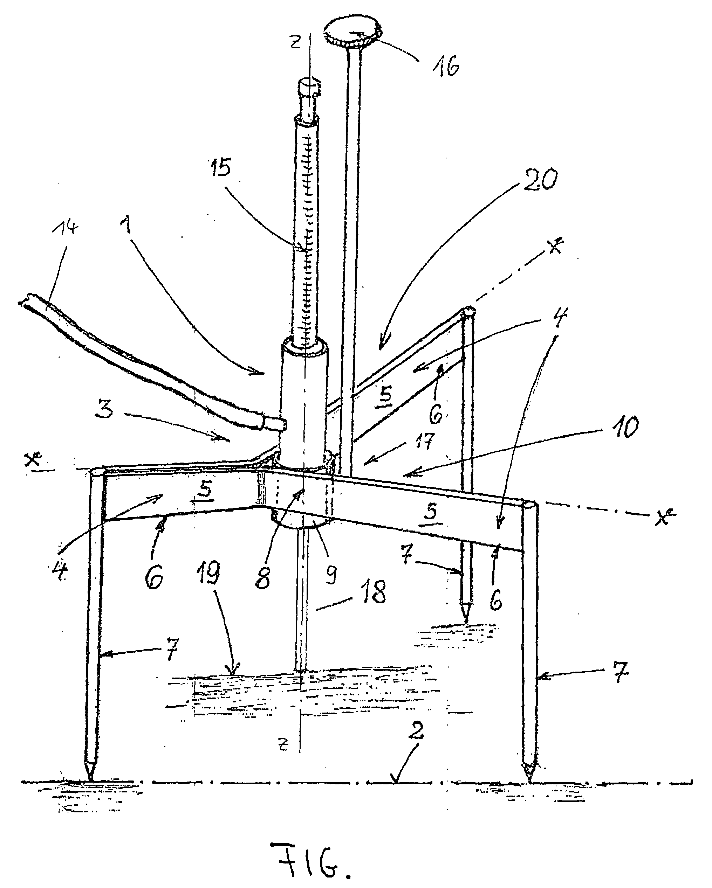

Weitere Ausgestaltungen der Erfindung sind in den Unteransprüchen angegeben. Darüberhinaus ergeben sich Einzelheiten, Merkmale und Vorteile der Erfindung aus der nachstehenden Erläuterung eines in der Zeichnung dargestellten Ausführungsbeispieles, worin ein Nivellierbock nach der Erfindung in perspektivischer Ansicht dargestellt ist.
Die Figur zeigt einen Nivellierbock (20) als Basis und/oder als Halterung für die Positionierung einer Lehre (1) zum Ermitteln eines exakten Niveaus (19). Die Lehre (1), welche nicht zum Umfang der Erfindung gehört, ist an sich bekannt. Sie besitzt z.B. einen höheneinstellbaren Niveau-Peilstab, mit dem sie die Höhenlage eines Materials anzeigt oder ermittelt. Dessen Höhe ist mit der Lehre (1) im Nivellierbock (20) einstellbar, indem mit dem z.B. als Exzenter-Feststel1er (17) durch Drehen des Drehknopfes (16) die Lehre im Nivellierbock (20) gelockert und dann in der Höhe in gewünschter Weise nach der Skala (15) eingestellt wird. Diese ist in üblicher Weise über z.B. einen Flüssigkeitsschlauch (14) mit einem weiteren Niveau-Anzeigegerät verbunden.

Der Nivellierbock (20) nach der Erfindung besitzt einen Körper (3) aus Flacheisen (4) mit zu einer Bezugsebene (2) senkrechten Flachseiten (5). Diese bilden in der senkrechten Projektion zur Bezugsebene (2) drei Arme (6) in Form eines "Y", welche eine zur Bezugsebene (2) parallele Ebene (x-x) aufspannen.
Jeder Arm (6) weist an seinem freien Ende einen senkrecht gegen die Bezugsebene (2) gerichteten abstandshaltenden Fuß (7) auf.

Mit Vorteil sind die Füße (7) an den Armen angeschweißte Stäbe aus Rundmaterial. Deren Enden sind zur Verbesserung der Standsicherheit als Spitzen ausgebildet.
Im Spreizwinkel (10) des Körpers (3) bzw. der Arme (6) ist eine Halterung (8) zum Schnell-lösbaren Anbringen bzw. zum Verstellen in der Höhe für die Lehre (1) vorhanden, die gegebenenfalls in Form einer Spreizfeder ausgebildet ist. Diese wirkt mit einem Feststell-Mechanismus (16,17) zusammen. Es kann sich dabei um einen Exzenter-Feststeller handeln, der mit Hilfe der Stange mit Drehknopf (16) betätigbar ist. Aber auch eine Feststellung mit Hilfe einer Schraube oder Feder soll nicht ausgeschlossen sein.

Die Erfindung ist nicht auf das gezeigte und beschriebene Ausführungsbeispiel beschränkt. So können beispielsweise die Füße (7) in an den freien Enden der Arme (6) anzuordnenden rohrförmigen Muffen (nicht gezeigt) geführte und mit beliebigen Feststellmitteln fixierbare Rundmetallstäbe, bevorzugt aus nichtkorrodierbarer Edelstahlqualität, sein.

Der Nivellierbock nach der Erfindung ist unkompliziert und robust, praxisgerecht und von relativ leichtem Baugewicht sowie preisgünstig herstellbar und löst somit in idealer Weise die eingangs gestellte Aufgabe.

## Patentansprüche

1. Nivellierbock als Basis und/oder als Halterung für die Positionierung einer Lehre (1) zum Ermitteln eines exakten Niveaus beispielsweise von Fließestrich, Pumpbeton oder dergleichen trägen Gußmassen, oder für eine Nivellierung von Gleisen und ähnlichen niveaubezogenen Elementen bzw. für eine Höheneinstellung von Deckenhaken für Hängedecken, relativ zu einer festen Bezugsebene (2), in Form eines dreiarmigen Stativs, mit einem Körper (3) aus Flacheisen (4), deren Flachseiten (5) mit zur Bezugsebene (2) senkrechten Ebenen zusammenfallen und in der senkrechten Projektion zur Bezugsebene (2) drei Arme (6) in Form eines "Y" bilden, welche eine zur Bezugsebene (2) parallele Ebene (x-x) aufspannen, wobei jeder Arm (6) an seinem freien Ende einen senkrecht gegen die Bezugsebene (2) gerichteten abstandshaltenden Fuß (7) aufweist, und mit einer Halterung (8) zum schnell-lösbaren Anbringen einer Lehre (1) im Zentrum zwischen den Füßen (7), **dadurch gekennzeichnet, daß** einer der Arme kürzer als die beiden anderen ist und daß die Halterung (8) im Spreizwinkel (10) der beiden langen Arme (6) des in der Projektion y-förmigen dreiarmigen Stativs angeordnet ist.

2. Nivellierbock nach Anspruch 1, **dadurch gekennzeichnet, daß** die Füße (7) an den freien Enden der Arme (6) angeschweißte Rundeisenstäbe sind.

3. Nivellierbock nach Anspruch 1 oder 2, **dadurch gekennzeichnet, daß** die freien Enden der Füße (7) als Spitzen ausgebildet sind.

4. Nivellierbock nach Anspruch 1, **dadurch gekennzeichnet, daß** die Halterung (8) bevorzugt eine rohrförmige Muffe (9) mit zu den Füßen (7) paralleler Mittelachse (z-z) ist, die eine Feststellung ermöglicht, wie eine Feststellschraube, und bevorzugt ein Exzenter-Feststeller (17) ist.

5. Nivellierbock nach Anspruch 4, **dadurch gekennzeichnet, daß** die Halterung (8) eine Spreizfeder ist.

6. Nivellierbock nach einem oder mehreren der Ansprüche 1 bis 5, **dadurch gekennzeichnet, daß** die Füße (7) in an den freien Enden der Arme (6) angeordneten rohrförmigen Muffen geführte und mit Feststellern, bevorzugt Feststellschrauben, versehene fixierbare Rundmetallstäbe, bevorzugt aus nicht korrodierbarer Edelstahlqualität, sind.

## Claims

1. Levelling stand as a base and/or as a holding device for positioning a gauge (1) for determining an exact level, for example, of flowing screed, pumped concrete or the like slow pouring compounds, or for the levelling of rails and the like level-related elements, or for the height adjustment of ceiling hooks for suspended roofs or ceilings, relative to a fixed reference plane (2), in the form of a three-legged support, comprising a body (3) of flat steel members(4) whose flat sides (5) coincide with planes which are vertical to the reference plane (2), and which flat sides (5) form three legs (6) in the shape of a "Y" in the vertical projection to the reference plane (2), which legs (6) tenter a plane (x-x) which is parallel to the reference plane (2), each leg (6) having at its free end a distancing foot (7) which is directed vertically to the reference plane (2), and comprising a holding device (8) for rapidly detachable attachment of a gauge (1) in the centre between the feet (7), **characterized in that** one of the legs is shorter than the other two legs and that the holding device (8) is arranged in the angle (10) enclosed by the two long legs (6) of the three-legged support, which in the projection is Y-shaped.

2. Levelling stand according to claim 1, **characterized in that** the feet (7) are round steel bars welded on at the free ends of the legs (6).

3. Levelling stand according to claim 1 or 2, **characterized in that** the free ends of the feet (7) are configured as pointed tips.

4. Levelling stand according to claim 1, **characterized in that** the holding device (8) is preferably a tubular sleeve (9) having a centre axis (z-z) parallel to the feet (7), which sleeve (9) enables a locking action by means of a locking device which may, for example, be a locking screw and preferably is an eccentric locking device(17).

5. Levelling stand according to claim 4, **characterized in that** the holding device (8) is a bracing spring.

6. Levelling stand according to one or more of claims 1 to 5, **characterized in that** the feet (7) are fixable round metal bars, preferably of noncorrosive special steel quality, which are guided in tubular sleeves disposed at the free ends of the legs (6) and are provided with locking devices, preferably locking screws.

## Revendications

1. Support pour mise à niveau comme base et / ou comme fixation pour le positionnement d'un gabarit (1) pour déterminer un niveau exact, par exemple, d'une chape coulée, d'un béton pompé ou de masses de remplissage inertes similaires, ou pour une mise à niveau de rails et d'éléments semblables liés au niveau resp. pour un réglage en hauteur de crochets pour des plafonds suspendus, par rapport à un niveau de référence fixe (2), en forme d'un support à trois bras, avec un corps (3) en fer plat (4), dont les côtés plats (5) coïncident avec des plans perpendiculaires au plan de référence (2) et forment en projection perpendiculaire au plan de référence (2) trois bras (6) en forme d'un « Y », lesquels définissent un plan (x-x) parallèle au plan de référence (2), chaque bras (6) présentant à son extrémité libre un pied (7) maintenant l'écartement orienté perpendiculairement au plan de référence (2), et avec une fixation (8) pour l'agencement rapidement détachable d'un gabarit (1) au centre entre les pieds (7), **caractérisé en ce que** l'un des bras est plus court que les deux autres et que la fixation (8) est agencée dans l'angle d'écartement (10) des deux bras longs (6) du support à trois bras en forme de Y dans la projection.

2. Support pour mise à niveau selon la revendication 1, **caractérisé en ce que** les pieds (7) sur les extrémités libres des bras (6) sont des barres en fer rond soudées.

3. Support pour mise à niveau selon la revendication 1 ou 2, **caractérisé en ce que** les extrémités libres des pieds (7) sont constituées comme des pointes.

4. Support pour mise à niveau selon la revendication 1, **caractérisé en ce que** la fixation (8) est de préférence un manchon de forme tubulaire (9) avec un axe médian (z-z) parallèle aux pieds (7) qui rend possible un dispositif d'arrêt, comme une vis d'arrêt, et de préférence un arrêtoir d'excentrique (17).

5. Support pour mise à niveau selon la revendication 4, **caractérisé en ce que** la fixation (8) est un ressort écarteur.

6. Support pour mise à niveau selon l'une ou plusieurs des revendications 1 à 5, **caractérisé en ce que** les pieds (7) sont des barres en fer rond, de préférence dans une qualité d'acier spécial ne pouvant pas être attaquée par la corrosion, pouvant être fixées, guidées dans des manchons de forme tubulaire disposés sur les extrémités libres des bras (6) et dotées d'arrêtoirs, de préférence de vis d'arrêt.
